# DEMANDE DE BREVET EUROPEEN

(11) **EP 1 429 169 A1**
(43) Date de publication de la demande: **16.06.2004**
(21) Numéro de dépôt: 03354090.7
(22) Date de dépôt: 12.12.2003
(51) Int. Cl.: G02B 21/06

(54) **Microscope optique à éclairage modifiable et procédé de fonctionnement d'un tel microscope**

(30) Priorité: 13.12.2002 FR 0215819
(71) Demandeur: Commissariat A L'Energie Atomique, 75752 Paris (FR)
(72) Inventeur: Boutet, Jérome, 38600 Fontaine (FR); Perraut, François, 38134 Saint-Joseph-De-Rivière (FR); Peltié, Philippe, 38760 Saint-Paul-De-Varces (FR); Rizo, Philippe, 38700 La Tronche (FR)
(74) Mandataire: Hecke, G.

(57) **Abrégé**

Un microscope (6) optique est adapté à l'observation de plusieurs sites (2) d'un objet (1) par un écran (3) de transmission optique modifiable, placé sur le trajet (9) du faisceau optique et apte à générer dans le plan (7) objet une image de l'écran coïncidant sensiblement avec les sites de l'objet. L'écran (3) de transmission optique modifiable peut comporter une matrice de miroirs, chacun des miroirs présentant une première position permettant de réfléchir le faisceau de lumière vers l'objet selon le trajet optique et une deuxième position permettant d'écarter le faisceau de lumière du trajet optique. Alternativement, l'écran (3) de transmission optique modifiable peut comporter une matrice d'éléments à cristaux liquides, chacun des éléments à cristaux liquides présentant un premier état transparent, un deuxième état opaque et, éventuellement, un troisième état polarisant. La source de lumière (8) peut être un réseau de diodes électroluminescentes.

## Description

### Domaine technique de l'invention

L'invention concerne un microscope optique adapté à l'observation de plusieurs sites d'un objet placé dans un plan objet du microscope, comportant une source de lumière, un objectif et un faisceau de lumière issu de la source de lumière.

### État de la technique

L'observation par microscope optique (la lecture) de bio-puces, plus particulièrement celles présentant un fort contraste, impose des techniques d'éclairage adaptées : il est en effet difficile d'imager simultanément des zones très lumineuses et peu lumineuses d'une même puce en raison de la dynamique limitée des détecteurs. Soit l'amplification du détecteur est suffisante pour visualiser les zones peu lumineuses et les zones très lumineuses sont saturées, soit l'amplification du détecteur est correcte pour les zones très lumineuses et trop faible pour distinguer les zones peu lumineuses du bruit.

Des exemples d'objets fortement contrastés sont les lames à immuno-fluorescence dont les sites bio-actifs, présentant une fluorescence prédéterminée, sont entourés d'un revêtement hydrophobe très fluorescent. Certaines bio-puces comportent des substances fluorescentes dont le but est de passiver les surfaces, d'éviter les contaminations mutuelles des sites bio-actifs ou d'isoler des contacts électriques. La fluorescence de ces substances est souvent plus forte que celle des sites bio-actifs. Ainsi, la mesure de fluorescence des sites bio-actifs est faussée par la fluorescence des zones qui entourent les sites bio-actifs. C'est le cas, par exemple, de certaines puces d'ADN à électropolymérisation ou de micro-plaques à puits.

Dans le cadre de mesures de cinétiques de réaction, l'illumination prolongée de certaines zones peut détruire la fluorescence, entraînant ainsi une perturbation des résultats.

Différentes solutions existent pour éviter les problèmes de contraste, par exemple l'emploi de matériaux de support peu fluorescents, de revêtements protecteurs ou d'écrans. Ces solutions imposent des contraintes qui augmentent le coût des dispositifs d'expérience et qui ne sont pas applicables dans tous les cas. Un autre moyen consiste à utiliser des détecteurs équipés d'un système d'anti-éblouissement. Cette solution présente des limitations (la réponse non-linéaire du détecteur ou la faible efficacité du système d'anti-éblouissement) et ne permet pas de résoudre des problèmes liés à la diffraction de la lumière par les optiques de collection, phénomène qui étale l'énergie lumineuse des régions intenses dans les régions faiblement lumineuses.

L'alternative consiste à utiliser un système de lecture point par point (un scrutateur) : l'éclairement de la surface est alors effectué par un petit point lumineux qui se déplace. Cette solution est très efficace lorsque la rémanence du détecteur est faible devant la vitesse de balayage et que le contraste reste modeste. Cette solution est mal adaptée lorsque la lecture doit se faire en fond de puits comme c'est le cas pour des micro-plaques ou certaines bio-puces car les bords des puits réduisent le taille du faisceau lumineux, donc l'efficacité de la mesure au niveau des fonds des puits. Les composants mécaniques et électroniques nécessaires pour assurer le balayage sont coûteux et difficiles à mettre en oeuvre.

### Objet de l'invention

L'invention a pour but de remédier à ces inconvénients et, plus particulièrement, de fournir un éclairage structuré adapté.

Selon l'invention, ce but est atteint par le fait que le microscope comporte un écran de transmission optique modifiable, comportant des zones présentant chacune un premier état passant et un deuxième état fermé, placé sur le trajet du faisceau optique en amont de l'objet et apte à générer dans le plan objet une image coïncidant sensiblement avec les sites à observer de l'objet.

Selon un développement de l'invention, l'écran de transmission optique modifiable comporte une matrice de miroirs, chacun des miroirs présentant une première position permettant de réfléchir le faisceau de lumière vers l'objet et une deuxième position permettant d'écarter le faisceau de lumière du trajet optique menant à l'objet.

Selon un autre développement de l'invention, l'écran de transmission optique modifiable comporte une matrice d'éléments à cristaux liquides chacun des éléments à cristaux liquides présentant un premier état transparent et un deuxième état opaque.

Selon un mode de réalisation préférentiel, les éléments à cristaux liquides de la matrice d'éléments à cristaux liquides présentent au moins un troisième état polarisant.

Selon un développement de l'invention, la source de lumière est constituée par un réseau de diodes électroluminescentes.

L'invention a également pour but un procédé de fonctionnement d'un microscope optique, comportant l'illumination de l'objet par émission d'une série d'impulsions lumineuses à intervalles prédéterminés.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 et 2 représentent respectivement un objet et un écran adapté à l'objet.
Les figures 3 et 4 illustrent deux modes de réalisation particuliers d'un microscope selon l'invention.
Les figures 5 et 6 représentent des écrans modifiables pouvant être utilisés respectivement dans les microscopes selon les figures 3 et 4.
Les figures 7 et 8 illustrent deux modes de réalisation particuliers d'un microscope selon l'invention.
La figure 9 représente un mode de réalisation particulier d'une source de lumière constituée par un réseau de diodes électroluminescentes.
La figure 10 illustre un mode de réalisation particulier d'un procédé de fonctionnement du microscope selon l'invention.

### Description de modes particuliers de réalisation

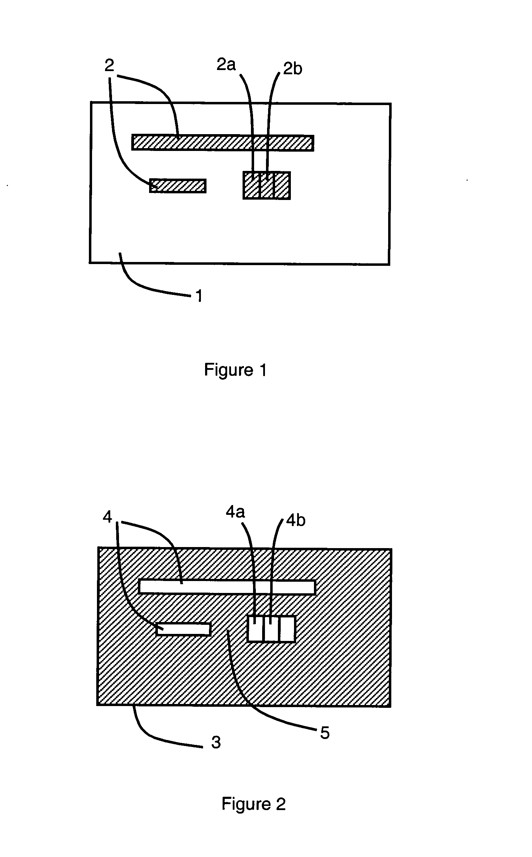

Les figures 1 et 2 représentent respectivement un objet 1 comportant plusieurs sites 2 destinés à être observés par l'intermédiaire d'un microscope optique et un écran 3 de transmission optique modifiable, comportant des zones présentant chacune un premier état passant et un deuxième état fermé. Sur la figure 2, des zones 4 représentent des zones passantes et des zones 5 représentent des zones fermées.

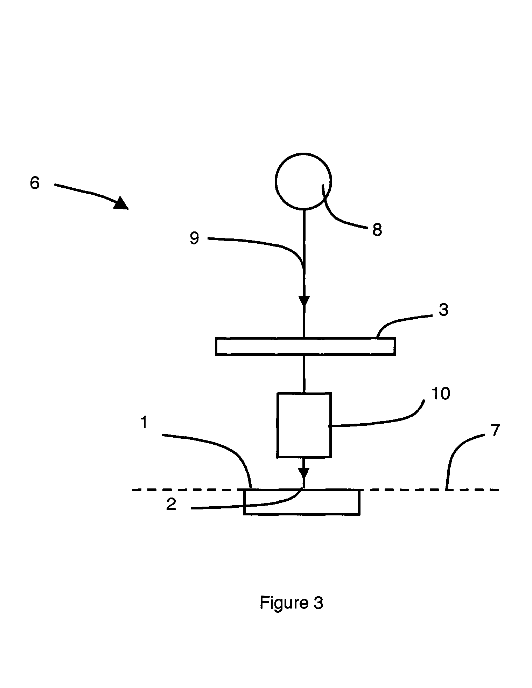

La figure 3 représente un mode de réalisation d'un microscope 6 optique adapté à l'observation de plusieurs sites 2 d'un objet 1 placé dans un plan objet 7 du microscope 6, comportant une source 8 de lumière et un faisceau de lumière issu de la source 8 de lumière selon un trajet optique 9. Un écran 3 de transmission optique modifiable est placé sur le trajet 9 optique. L'écran 3 est apte à générer une image dans le plan objet 7, l'image coïncidant sensiblement avec les sites 2 de l'objet 1. Un objectif 10, disposé entre l'écran 3 et l'objet 1, permet d'observer l'objet 1. Sur la figure 3, l'écran 3 de transmission optique transmet la lumière par transparence. Ainsi, sur la figure 3, le trajet 9 optique traverse l'écran 3. L'écran peut être disposé dans un tube d'éclairage du microscope.

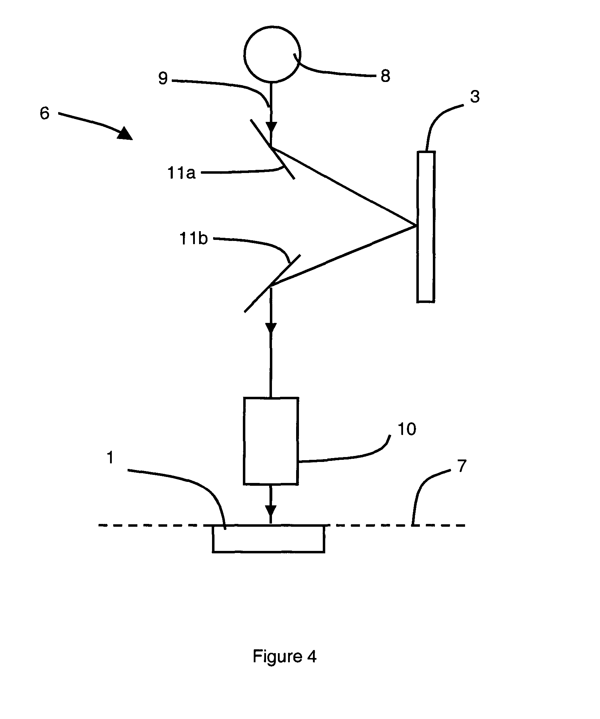

La figure 4 illustre un autre mode de réalisation d'un microscope 6 optique, dans lequel l'écran 3 de transmission optique transmet la lumière par réflexion. Ainsi, le faisceau lumineux émis par la source 8 de lumière est réfléchi par un premier miroir 11a, placé sur le trajet optique 9. Le faisceau réfléchi par le premier miroir 11a est ensuite réfléchi par l'écran 3, disposé sensiblement parallèlement à un axe allant de la source de lumière 8 à l'objet 1. Le faisceau réfléchi par l'écran 3 est ensuite réfléchi par un second miroir 11b, placé sur l'axe allant de la source de lumière 8 à l'objet 1, de manière à atteindre l'objet 1 à travers l'objectif 10.

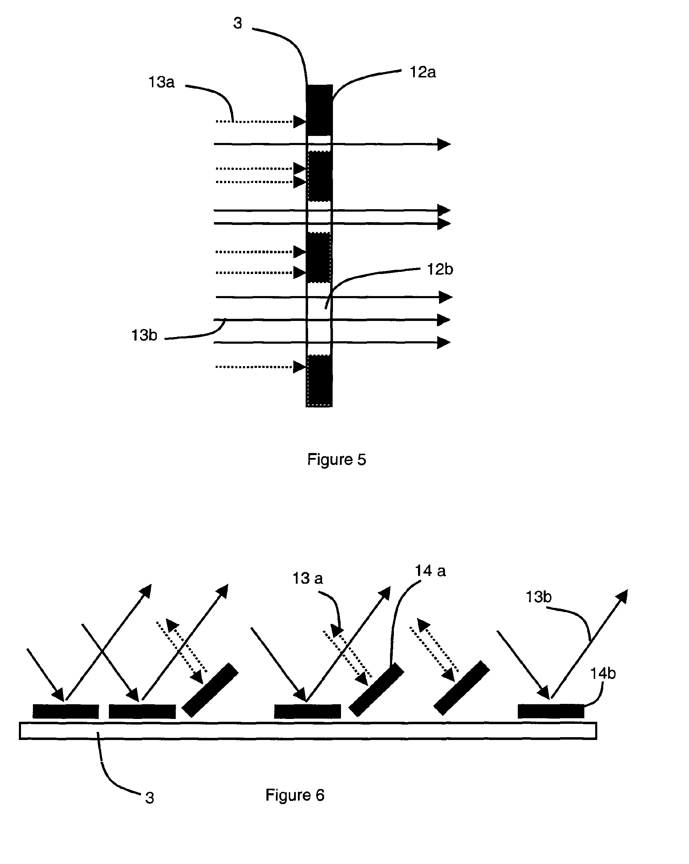

La figure 5 représente un écran 3 de transmission optique modifiable pouvant être utilisé dans un montage en transmission, par exemple dans un microscope selon la figure 3. L'écran comporte une matrice d'éléments 12 à cristaux liquides, chacun des éléments 12 à cristaux liquides présentant un premier état transparent et un deuxième état opaque dépendant d'une commande appliquée. L'écran 3 est illuminé par des rayons 13 de lumière. Un rayon 13a de lumière arrivant sur un élément 12a dans un état opaque est bloqué par l'écran, tandis qu'un rayon 13b de lumière arrivant sur un élément 12b dans un état transparent est transmis par l'écran.

La figure 6 représente un écran 3 de transmission optique modifiable pouvant être utilisé dans un montage en réflexion, par exemple dans un microscope selon la figure 4. L'écran comporte une matrice de miroirs 14, chacun des miroirs 14 présentant une première position permettant de réfléchir la lumière vers l'objet et une deuxième position permettant d'écarter la lumière du trajet 9 optique. Ainsi, sur la figure 6, un rayon 13b de lumière arrivant sur un miroir 14b dans la première position (parallèle au plan de l'écran 3 sur la figure 6) est réfléchi selon un trajet optique lui permettant d'atteindre l'objet 1, tandis qu'un rayon 13a de lumière arrivant sur un miroir 14a dans la deuxième position (inclinée par rapport au plan de l'écran 3 sur la figure 6) est écarté du trajet optique atteignant l'objet 1.

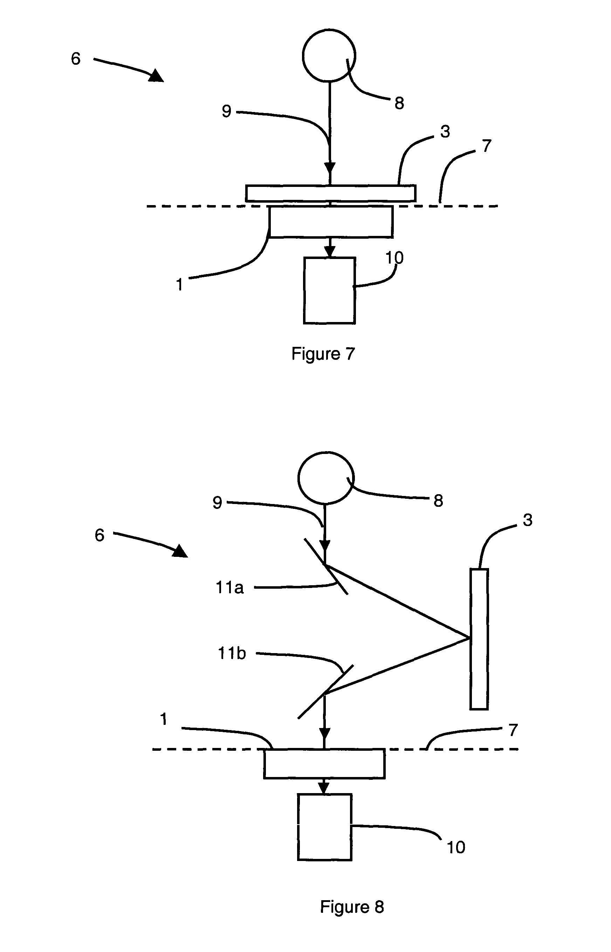

De manière générale, la mesure peut être réalisée avec des techniques de mesure de transmission (photométrie d'absorption), de réflexion (photométrie en réflexion) et de fluorescence. Les figures 7 et 8 sont des variantes de réalisation des microscopes des figures 3 et 4, dans lesquelles l'objet 1 est disposé entre l'objectif 10 et l'écran 3 de transmission optique modifiable. Ainsi l'objectif 10 mesure la transmission de la lumière par l'objet 1. Dans le mode de réalisation particulier représenté à la figure 7, l'écran 3 de transmission optique modifiable est disposé directement sur l'objet 1.

Certains matériaux comme les cristaux liquides ont des propriétés de polarisation de la lumière. Il est alors possible de programmer la direction de polarisation de l'excitation pour chaque site 2 en fonction des critères de mesure. Dans un mode de réalisation particulier d'un microscope 6, comportant un écran 3 de transmission optique à base de cristaux liquides, les éléments à cristaux liquides présentent au moins un troisième état polarisant. Par exemple, les éléments peuvent présenter deux états polarisants orthogonaux. Ainsi, certains sites 2a (figure 1) peuvent être éclairés avec une première direction de polarisation à travers des zones passantes 4a associées (figure 2) et d'autres sites 2b peuvent être éclairés avec une polarisation orthogonale à la première direction à travers des zones passantes 4b associées (figure 2). Ces mesures polarisées permettent par exemple de différencier des molécules longues des molécules courtes, dans des applications de séquençage de l'ADN ou de détection de mutation.

Un microscope 6 selon l'invention permet d'adapter l'éclairage à l'objet 1, dans l'espace et dans le temps, en programmant l'écran 3 de transmission optique.

Afin d'éclairer un objet 1 de structure connue, l'éclairage doit être adapté à l'orientation et à la position exacte de l'objet 1 dans le plan objet 7. Pour cela, une première image de l'objet 1, via un écran 3 complètement passant, révèle la structure, la position exacte et l'orientation de l'objet. Par comparaison ou corrélation avec le modèle théorique de la structure connue, la transmission optique de l'écran 3 peut être adaptée automatiquement, par programmation, à la position exacte et à l'orientation de l'objet 1, de manière à ce que l'éclairage corresponde à l'éclairage des sites 2 destinés à être observés.

Afin d'éclairer un objet 1 de structure inconnue, une analyse est effectuée sur une première image de l'objet 1, via un écran 3 complètement passant. Ainsi, les zones à observer sont repérées et la transmission optique de l'écran 3 est adaptée à la structure ainsi repérée, de manière à ce que l'éclairage corresponde à l'éclairage des sites 2 destinés à être observés. Ainsi, les zones 4 de l'écran prennent automatiquement la forme des sites 2 à observer.

L'écran 3 de transmission optique modifiable permet également de changer l'image de l'écran 3 pendant une mesure. Il est ainsi possible de suivre de manière plus fiable une cinétique en s'affranchissant de la photo-extinction d'un marqueur. Dans le cas d'un objet 1 structuré en plots contenant des molécules (oligonucléotides, complémentaires d'une séquence donnée, anticorps spécifiques d'un antigène, etc...), des sites 2a et 2b (figure 1) des plots réactionnels ne sont pas éclairés simultanément, mais un premier site 2a est éclairé d'abord et un deuxième site 2b est éclairé ensuite, respectivement par l'intermédiaire de zones 4a et 4b (figure 2) correspondantes de l'écran 3. Par conséquent, chaque mesure ne tient compte que du site éclairé. Ainsi, on limite la photo-extinction et l'information recueillie est spécifique de la cinétique de la réaction qu'on souhaite étudier. Le passage de l'éclairage du premier site 2a au deuxième site 2b peut être fait après un certain nombre de lectures, lorsque l'utilisateur considère que le premier site 2a n'est plus exploitable.

Une autre application d'un écran 3 de transmission optique modifiable est l'éclairage de différents sites 2 pendant des durées différentes. Par exemple, un premier site 2a de l'objet 1 (figure 1) peut être éclairé moins longtemps qu'un deuxième site 2b de l'objet 1. Pour ce faire, l'écran 3 est fermé dans la zone 4a correspondant au premier site 2a de l'objet 1 alors que l'écran 3 reste passant dans la zone 4b correspondant au site 2b, de manière à éclairer le deuxième site 2b. L'avantage d'une telle méthode est de permettre une grande dynamique de détection malgré un détecteur saturant. Par exemple, deux sites (2a et 2b) dont les niveaux d'émission sont très différents peuvent être situés sur un objet 1. Le site 2a émet un équivalent de 200 NG (niveau de gris), le site 2b émet l'équivalent de 20000 NG et le détecteur sature à 255NG. Il faut intégrer cent fois moins longtemps le site 2b que le site 2a. Au départ de la mesure, l'écran 3 est transparent pour les sites 2a et 2b. Si la mesure pour obtenir un bon signal en provenance du site 2a doit durer 60s, on obture spécifiquement la zone 4b conjuguée au site 2b au bout de 0.6s pour éviter que le détecteur ne sature.

Aujourd'hui, la résolution de l'écran peut atteindre 1024x768 pixels élémentaires pour les matrices de cristaux liquides. Des matrices de micro-miroirs, permettant de réfléchir la lumière de façon sélective en fonction d'une commande appliquée, peuvent atteindre une résolution du même ordre.

L'invention n'est pas limitée aux modes de réalisation particuliers représentés ci-dessus. En particulier, le trajet optique allant de la source de lumière 8 à l'objet 1 peut comporter un miroir semi-réfléchissant ou une lame séparatrice de longueur d'onde disposée entre l'écran 3 et l'objet 1.

La source de lumière 8 peut, de manière connue, être constituée par une lampe halogène ou une lampe à arc. Cependant, ces types de sources de lumière présentent beaucoup de pertes de lumière et ont des coûts d'achat et d'exploitation élevés. Par ailleurs, les lasers ont l'inconvénient de fournir une lumière cohérente qui engendre des figures de diffraction, ce qui détériore l'homogénéité spatiale de l'illumination de l'objet.

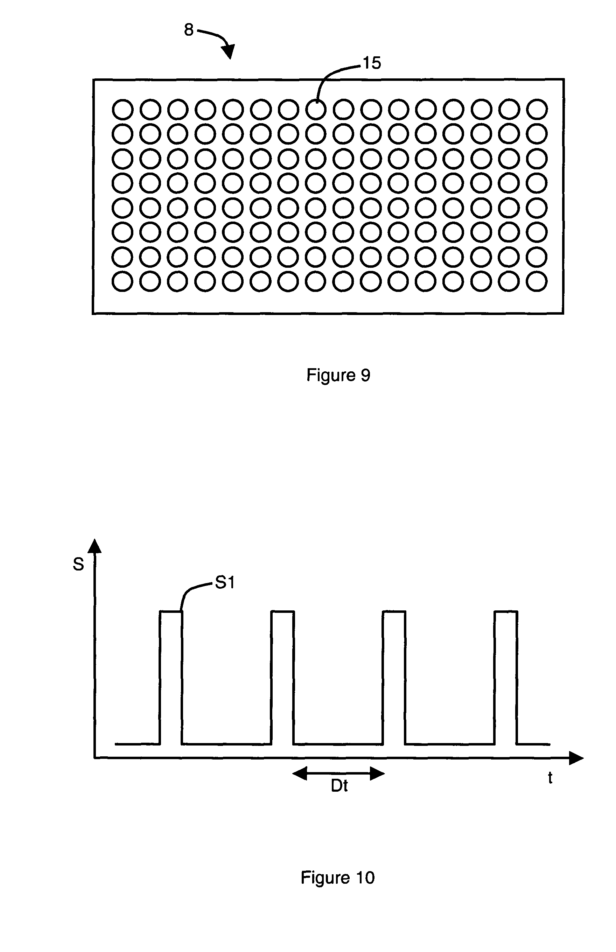

Avantageusement, la source de lumière 8 est constituée par un réseau de diodes électroluminescentes 15, représenté à la figure 9. Dans le cas d'un objet 1 structuré en plots, chaque diode électroluminescente 15 peut être associée à un plot. Par exemple, l'objet peut comporter huit rangées à seize plots et le réseau peut comporter huit rangées à seize diodes comme représenté à la figure 9. Dans la plupart des applications, la puissance d'une diode électroluminescente 15 unique est suffisante pour l'illumination d'un plot.

De préférence, le réseau de diodes électroluminescentes 15 comporte des diodes électroluminescentes 15 de différentes couleurs. Par exemple, le réseau peut comporter quatre séries de diodes, respectivement bleues, vertes, oranges et rouges. Plusieurs réseaux de diodes électroluminescentes 15 différents peuvent être disposés sur un support, en forme de roue, permettant de placer sélectivement le réseau souhaité à la place de la source de lumière 8.

Le fonctionnement des diodes en illumination continue n'est pas indispensable, notamment pour des mesures de fluorescence. En effet, il suffit d'illuminer les molécules fluorescentes pendant une courte durée. Ensuite, la source de lumière peut être éteinte pendant un intervalle correspondant approximativement au temps de relaxation des molécules. Ainsi, comme représenté à la figure 10, un procédé de fonctionnement d'un microscope optique selon l'invention comporte l'illumination S de l'objet 1 par émission d'une série d'impulsions lumineuses S1 à intervalles prédéterminés Dt. La durée d'une impulsion S1 peut être de l'ordre de quelques µs, tandis que l'intervalle Dt peut être sensiblement plus long, par exemple une ms. Le signal de fluorescence est, de préférence, acquis pendant un temps d'intégration de l'ordre d'une seconde, afin d'accumuler une multitude de cycles comportant chacun une impulsion lumineuse S1.

## Revendications

1. Microscope optique adapté à l'observation de plusieurs sites (2) d'un objet (1) placé dans un plan objet du microscope, comportant une source de lumière (8), un objectif (10) et un faisceau de lumière issu de la source de lumière, microscope **caractérisé en ce qu'**il comporte un écran (3) de transmission optique modifiable, comportant des zones (4, 5) présentant chacune un premier état passant (4) et un deuxième état fermé (5), placé sur le trajet du faisceau optique en amont de l'objet et apte à générer dans le plan (7) objet une image coïncidant sensiblement avec les sites (2) à observer de l'objet.

2. Microscope selon la revendication 1, **caractérisé en ce que** l'écran (3) de transmission optique modifiable comporte une matrice de miroirs (14), chacun des miroirs présentant une première position (14b) permettant de réfléchir le faisceau de lumière vers l'objet (1) et une deuxième position (14a) permettant d'écarter le faisceau de lumière du trajet optique menant à l'objet.

3. Microscope selon la revendication 1, **caractérisé en ce que** l'écran (3) de transmission optique modifiable comporte une matrice d'éléments (12) à cristaux liquides chacun des éléments à cristaux liquides présentant un premier état transparent (12b) et un deuxième état opaque (12a).

4. Microscope selon la revendication 3, **caractérisé en ce que** les éléments à cristaux liquides (12) de la matrice d'éléments à cristaux liquides présentent au moins un troisième état polarisant.

5. Microscope selon l'une quelconque des revendications 1, 3 et 4, **caractérisé en ce que** l'écran (3) de transmission optique modifiable est disposé directement sur l'objet (1).

6. Microscope selon l'une quelconque des revendications 1 à 5, **caractérisé en ce que** l'objet (1) est disposé entre l'objectif (10) et l'écran (3) de transmission optique modifiable.

7. Microscope selon l'une quelconque des revendications 1 à 6, **caractérisé en ce que** la source de lumière (8) est constituée par un réseau de diodes électroluminescentes (15).

8. Microscope selon la revendication 7, **caractérisé en ce que** le réseau de diodes électroluminescentes (15) comporte des diodes électroluminescentes (15) de différentes couleurs.

9. Procédé de fonctionnement d'un microscope optique selon l'une des revendications 7 et 8, **caractérisé en ce qu'**il comporte l'illumination (S) de l'objet (1) par émission d'une série d'impulsions lumineuses (S1) à intervalles prédéterminés (Dt).
